Europäisches Patentamt

European Patent Office

Office européen des brevets

(19)

(11) Numéro de publication: **0 317 397**
**A1**

(12) **DEMANDE DE BREVET EUROPEEN**

(21) Numéro de dépôt: 88402824.2

(22) Date de dépôt: 10.11.88

(51) Int. Cl.⁴: **A 61 C 9/00**

(30) Priorité: 13.11.87 FR 8715662

(43) Date de publication de la demande:
24.05.89 Bulletin 89/21

(84) Etats contractants désignés:
AT BE CH DE ES FR GB GR IT LI LU NL SE

(71) Demandeur: Berceaux, Pierre
39, boulevard Henri Henrot
F-51100 Reims (FR)

(72) Inventeur: Berceaux, Pierre
39, boulevard Henri Henrot
F-51100 Reims (FR)

(74) Mandataire: Gérardin, Robert Jean René
PROT'INNOV INTERNATIONAL SA Résidence de
l'Observatoire avenue Georges Clémenceau Boîte
Postale 2764
F-51066 Reims Cédex (FR)

(54) **Positionneur prothétique pour l'art dentaire.**

(57) Ce positionneur est constitué principalement d'un boîtier semi-rigide **(10)** comportant un ergot de rétention **(11)**, un évidement **(12)** dont les petits côtés **(121 et 122)** sont inclinés l'un vers l'autre et délimités par des fentes transversales et des languettes de fixation et de manoeuvre **(141 et 142)** fixées aux extrémités **(101 et 102)** du boîtier **(10)**; d'une partie comportant deux ergots de rétention **(21)** et un insert en forme de queue d'aronde **(22)** et de deux cavaliers **(30)** comportant des dardillons **(31)**. L'introduction de l'insert **(22)** dans l'évidement **(12)** du boîtier **(10)**, ou sa libération, est obtenue par déformation du boîtier **(10)** par l'intermédiaire des languettes **(141 et 142)**.

FIG.1

EP 0 317 397 A1

## Description

### Positionneur prothétique pour l'art dentaire

L'invention concerne un positionneur prothétique permettant de rendre amovible des portions d'empreintes prothétiques et d'obtenir celles-ci par coulée en une seule phase.

On connaît déjà des dispositifs permettant de rendre amovible des portions d'empreintes prothétiques, par découpage à la scie, tels que ceux décrits dans le brevet français **FR-A-2.157.331** et le brevet de la République Fédérale d'Allemagne **DE-A-3.103.637** et qui correspondent au préambule de la revendication 1. Ces dispositifs se présentent sous la forme de systèmes enfichables, ou encliquetables par bouton pression, qui ne permettent pas d'obtenir, de ce fait, un contact suffisamment étroit entre les parties s'opposant au jeu et à des interpositions de déchets dans le plan de joint, qui faussent le résultat. Dans la plupart des cas, l'empreinte doit être coulée en deux phases.

La présente invention a pour but de remédier à ces inconvénients. Cette invention telle qu'elle est caractérisée dans la revendication 1 résout le problème consistant à créer un positionneur prothétique se présentant sous la forme d'un boîtage hermétique, entièrement étanche et sans jeu, maintenu solidement dans l'empreinte négative, dont l'amovibilité est obtenue par deux simples traits de scie.

Le positionneur prothétique selon l'invention, permettant de rendre amovible des portions d'empreintes prothétiques et d'obtenir celles-ci par coulée en une seule phase se caractérise principalement en ce qu'il est constitué d'un boîtier semi-rigide servant à supporter la partie positive de l'empreinte par l'intermédiaire d'un ergot de rétention, dans lequel, s'insère hermétiquement une partie destinée à faire corps avec l'empreinte positive prothétique par l'intermédiaire de deux ergots de rétention et de deux cavaliers servant à immobiliser l'ensemble par rapport à l'empreinte négative.

La solidarisation provisoire des deux parties et l'imbrication hermétique de celles-ci sont obtenues par l'intermédiaire d'un évidement de forme rectangulaire, aménagé dans le boîtier déformable, dont les petits côtés sont inclinés l'un vers l'autre, de façon à former un emboîtage en queue d'aronde déformable, et d'un insert rectangulaire de même forme et de même dimension solidaire de l'autre partie.

Les petits côtés inclinés de l'évidement du boîtier sont délimités chacun par deux fentes transversales dont la profondeur correspond à celle de l'évidement.

L'immobilisation de l'ensemble, par les cavaliers, par rapport à l'empreinte négative, est obtenue par l'intermédiaire de deux languettes solidaires chacune de l'un des petits côtés du boîtier déformable, dans le prolongement de l'évidement et dans le plan de symétrie longitudinal de celui-ci. Ces languettes ont une section demi-circulaire de rayon correspondant à la courbure des cavaliers.

Les extrémités des cavaliers comportent des dardillons destinés à s'opposer à tout déplacement longitudinal après mise en place.

Le plaquage hermétique de l'insert contre le fond de l'évidement du boîtier est obtenu par serrage, sous l'effet d'un jeu négatif, de la queue d'aronde mâle constituant l'insert, par la queue d'aronde femelle constituée par les petits côtés inclinés de l'évidement.

L'introduction ou le retrait de l'insert du boîtier s'effectue par redressement de l'un des petits côtés de l'évidement par déformation de l'une des extrémités du boîtier semi-rigide, en exerçant un effet de levier sur la languette correspondante dans le sens approprié.

Ce positionneur est réalisé par injection dans une matière plastique semi-rigide.

Les avantages obtenus, grâce à cette invention, consistent essentiellement en ce que le risque d'interposition de déchets est nul, compte-tenu de l'étanchéité assurée, et en ce que toutes les parties sont visibles et peuvent être ainsi constamment contrôlées.

Le maintien en place par des cavaliers parfaitement ajustés, solidement implantés dans l'empreinte négative, s'oppose à toute apparition de jeu. Deux traits de scie suffisent à rendre l'élément désiré amovible. Du fait de leur conception, toutes les pièces de ce positionneur peuvent être obtenues à un prix très bas, par moulage par injection dans une matière plastique semi-rigide à bon marché, dont la souplesse est suffisante pour l'obtention d'un certain serrage entre les queues d'aronde mâle et femelle, tout en permettant la déformation temporaire indispensable à l'introduction et au retrait de l'insert.

D'autres caractéristiques et avantages apparaîtront dans la description qui va suivre d'un mode de réalisation du positionneur, selon l'invention, donné à titre d'exemple non limitatif au regard des dessins annexés sur lesquels :
- la figure 1 représente une vue en coupe longitudinale du boîtier, selon **BB** (fig.2),
- la figure 2 représente une vue de dessus du boîtier,
- la figure 3 représente une vue en coupe transversale selon **AA** (fig.2) du boîtier,
- la figure 4 représente une vue de face de l'autre partie,
- la figure 5 représente une vue de côté de l'autre partie,
- la figure 6 représente une vue de face d'un cavalier d'immobilisation,
- la figure 7 représente une vue en coupe longitudinale de l'ensemble monté, avec indication des déformations en trait mixte.

Le positionneur prothétique selon l'invention est constitué principalement d'un boîtier semi-rigide **10** comportant un ergot de rétention **11**, un évidement **12** dont les petits côtés **121** et **122** sont inclinés l'un vers l'autre et délimités par des fentes transversales

130 et 131 et des languettes de fixation et de manoeuvre 141 et 142 fixées aux extrémités 101 et 102 du boîtier; d'une partie 20 comportant deux ergots de rétention 21 et un insert 22 en forme de queue d'aronde ; et de deux cavaliers 30 comportant des dardillons 31.

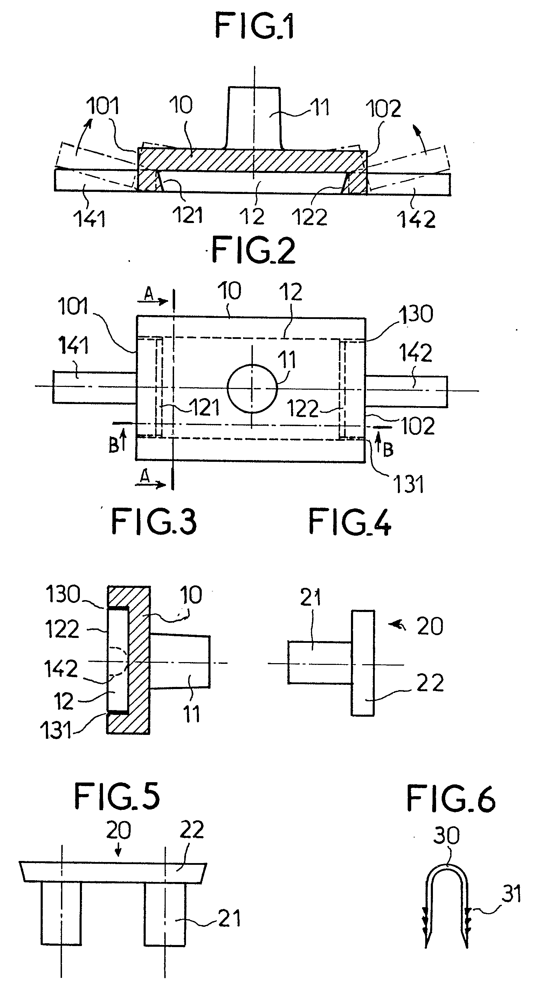

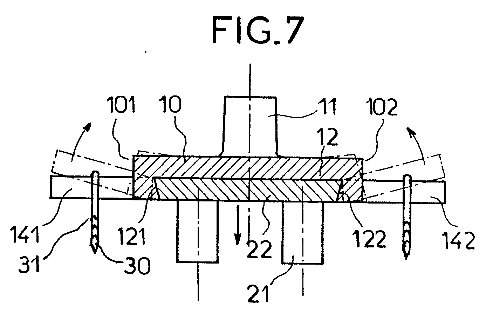

En se reportant aux figures des dessins, on remarque que, compte-tenu de la semi-rigidité du matériau utilisé pour réaliser notamment le boîtier 10, de la délimitation des côtés 121 et 122 de l'évidement 12 par des fentes 130 et 131, de profondeur identique à celle de l'évidement, et à la présence des languettes de fixation et de manipulation 141 et 142, au niveau de cet évidement, solidaires des côtés 101 et 102 du boîtier, il est aisé de déformer ce dernier, par action sur lesdites languettes 141 et 142, comme représenté en trait mixte sur les figures 1 et 7, pour permettre l'introduction de l'insert 22 dans l'évidement 12 du boîtier 10, ou pour obtenir la libération de celui-ci.

## Revendications

1. Positionneur prothétique pour l'art dentaire permettant de rendre amovible des portions d'empreintes prothétiques et d'obtenir celles-ci par coulée en une seule phase caractérisé en ce qu'il est constitué principalement d'un boîtier semi-rigide (10) servant à supporter la partie positive de l'empreinte par l'intermédiaire d'un ergot de rétention (11), dans lequel s'insère hermétiquement une partie ((20), destinée à faire corps avec l'empreinte positive prothétique par l'intermédiaire de deux ergots de rétention (21), et de deux cavaliers (30) servant à immobiliser l'ensemble par rapport à l'empreinte négative.

2. Positionneur prothétique selon la revendication 1 caractérisé en ce que la solidarisation provisoire des deux parties (10,20) et l'imbrication hermétique de celles-ci sont obtenues par l'intermédiaire d'un évidement (12), de forme rectangulaire, aménagé dans le boîtier déformable (10) dont les petits côtés (121,122) sont inclinés l'un vers l'autre de façon à former un emboîtage en queue d'aronde déformable, et d'un insert rectangulaire (22) de même forme et de même dimension, solidaire de l'autre partie (20).

3. Positionneur prothétique selon la revendication 1, caractérisé en ce que les petits côtés inclinés (121,122) de l'évidement (12) du boîtier (10) sont délimités chacun par deux fentes transversales (130,131)dont la profondeur correspond à celle de l'évidement (12).

4. Positionneur prothétique selon la revendication 1 caractérisé en ce que l'immobilisation de l'ensemble par les cavaliers (30), par rapport à l'empreinte négative, est obtenue par l'intermédiaire de deux languettes (141,142) solidaires chacune de l'un des petits côtés (101,102) du boîtier déformable (10), situées dans le prolongement de l'évidement et dans le plan de symétrie longitudinal de celui-ci.

5. Positionneur prothétique selon la revendication 4, caractérisé en ce que les languettes (141,142) ont une section demi-circulaire de rayon (R) correspondant à la courbure des cavaliers (30).

6. Positionneur prothétique selon la revendication 1, caractérisé en ce que les extrémités des cavaliers (30) sont munies de dardillons (31).

7. Positionneur prothétique selon la revendication 1 caractérisé en ce que le plaquage hermétique de l'insert (22) contre le fond de l'évidement (12) du boîtier (10) est obtenu par serrage, sous l'effet d'un jeu négatif, de la queue d'aronde mâle constituant l'insert (22) par la queue d'aronde femelle constituée par les petits côtés inclinés (121,122) de l'évidement (12).

8. Positionneur prothétique selon la revendication 1 caractérisé en ce que l'introduction ou le retrait de l'insert (22) du boîtier. (10) s'effectue par redressement de l'un des petits côtés (121 ou 122) de l'évidement (12) par déformation de l'une des extrémités (101 ou 102) du boîtier semi-rigide (10) en exerçant un effet de levier sur la languette (141 ou 142) correspondant, dans le sens approprié.

9. Positionneur prothétique selon la revendication 1 caractérisé en ce qu'il est réalisé par injection dans une matière plastique semi-rigide.

# FIG.1

# FIG.2

# FIG.3

# FIG.4

# FIG.5

# FIG.6

# FIG.7

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-2 157 331 (EBERHARD)<br>--- | | A 61 C 9/00 |
| A | DE-A-3 103 637 (ZEISER)<br>----- | | |

DOMAINES TECHNIQUES RECHERCHES (Int. Cl.4)

A 61 C

**Le présent rapport a été établi pour toutes les revendications**

| Lieu de la recherche | Date d'achèvement de la recherche | Examinateur |
|---|---|---|
| LA HAYE | 06-01-1989 | CLARKSON P.M. |